# EUROPEAN PATENT SPECIFICATION

(11) **EP 1 604 568 B1**
(45) Date of publication and mention of the grant of the patent: **20.02.2008**
(21) Application number: 05076322.6
(22) Date of filing: 07.06.2005
(51) Int. Cl.: A01K 80/00, B63B 35/18

(54) **Device for fishing shellfish**
Vorrichtung zum Fangen von Schalentieren
Dispositif de récolte de mollusques

(30) Priority: 07.06.2004 NL 1026350
(43) Date of publication of application: 14.12.2005
(73) Proprietor: Maaskant Bruinisse BV, 4311 BA Bruinisse (NL)
(72) Inventor: Van der Zwan, Marcel, 4744 RH Bosschenhoofd (NL)
(74) Representative: Uittenbogaart, Gustaaf Adolf

(56) References cited:
- EP-A- 0 443 637
- US-A- 4 209 920

## Description

The invention relates to a device according to the preamble of Claim 1.A device of this type is known from EP 0443637. This document discloses a fishing vessel whereby the trawl-net is hauled in at the stern of the vessel. The disadvantage of the disclosed device is that the trawl-net is not guided properly when it is hoisted aboard.

It is an object of the invention to overcome this drawback, and to this end the device is designed in accordance with the characterizing clause of Claim 1.

Preferred features of the invention are set out in the dependent claims.

The invention is described in more detail below with reference to an exemplary embodiment using a drawing, in which:
Fig. 1 shows a side view of a vessel with an unloading device for unloading the trawl-net according to the invention;
Fig. 2 shows a plan view of the vessel according to Fig. 1 with the trawl-net trawling behind the vessel;
Fig. 3 shows a side view of the unloading device;
Fig. 4 shows a rear view of the unloading device, and
Fig. 5 shows a diagrammatic section V-V of Fig. 2 with the unloading device and the trawl-net in the various stages a-k illustrating how the trawl-net is used for fishing and how it is unloaded.

In the various figures, identical parts are indicated by the same reference numerals.

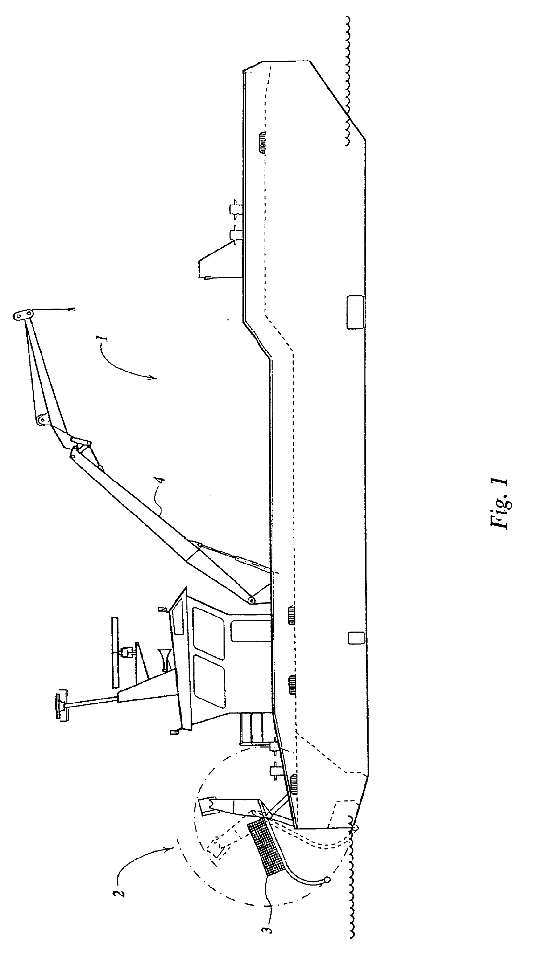

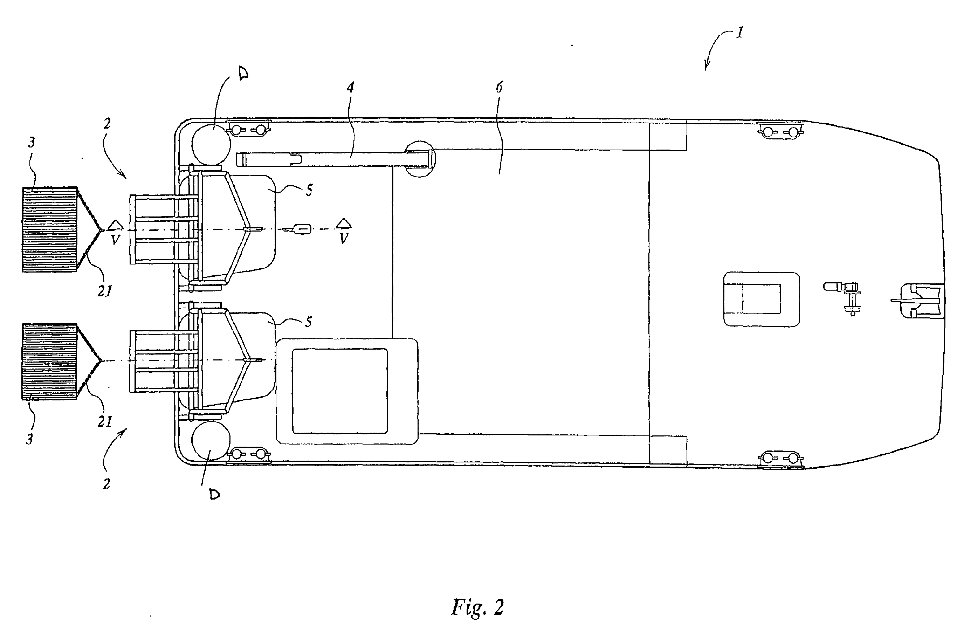

Fig. 1 and Fig. 2 show a vessel 1 which is used for catching shellfish, such as mussels, using a trawl-net 3. A trawl-net is a dragnet which can be dragged over the bottom. At the front, a trawl-net has means for keeping the entry of the dragnet open, for example a tubular frame and the underside of the trawl-net is usually reinforced and flat as it has to be dragged over the bottom. In the embodiment shown, the trawl-net 3 is constructed as a rectangular metal box, the wall directed to the front which is open and the other walls are designed as a metal grid or with wire netting so that the water flowing into the trawl-net 3 at the front can flow out of it, with the shellfish remaining in the trawl-net 3. In an alternative embodiment, the front is designed as a rectangular tubular frame to which a bag-shaped net is attached. Preferably, stay cables are attached to the rectangular tubular frame for keeping the bag-shaped net open.

Two rudder propellers D are arranged at the rear of the vessel 1 in a known manner in order to propel the vessel 1, each of which can deliver thrust all round and make the vessel 1 very manoeuvrable.

The vessel 1 is provided with an unloading device 2 into which the trawl-net 3 is drawn during emptying. The caught shellfish, such as mussels, fall into a rinsing basin 5. The rinsing basin 5 is provided with a rinsing device (not shown) with which the shellfish are rinsed clean. The shellfish are then poured from the rinsing basin 5 into a container, such as a big-bag, using a conveying device with one or more conveyor belts. Preferably, there are two containers which are filled alternately. Filled containers are placed in a hold 6 using a hoisting device 4. Obviously, other embodiments are possible for the further treatment of caught shellfish.

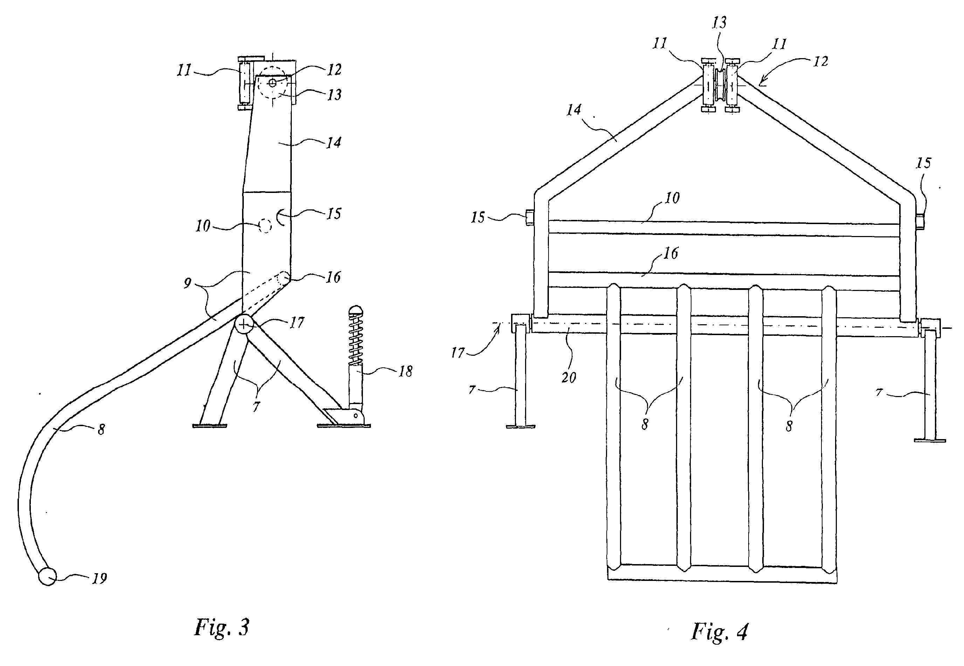

Fig. 3 and Fig. 4 show the unloading device 2. A supporting frame 7 is mounted on the vessel 1 in which a tilting frame 9 can rotate about a horizontal rotation shaft 17. The tilting frame 9 comprises an A-shaped top support 14 which is attached to a tube 20, which is rotatably fitted in the supporting frame 7 and can rotate about the rotation shaft 17. A coupling tube 16 is placed between the legs of the top support 14 and curved guiding tubes 8 are attached to the coupling tube 16 which are also attached to the tube 20 and which are coupled at their far ends by an end tube 19. The guiding tubes 8 form a guide along which the trawl-net 3 can be pulled to the top support 14. Between the legs of the top support 14, there is also arranged a limiting tube 10, which can form a support for the trawl-net 3 lying on the guiding tubes 8 and at the same time limit the forward movement of the trawl-net 3 during the tilting of the tilting frame 9.

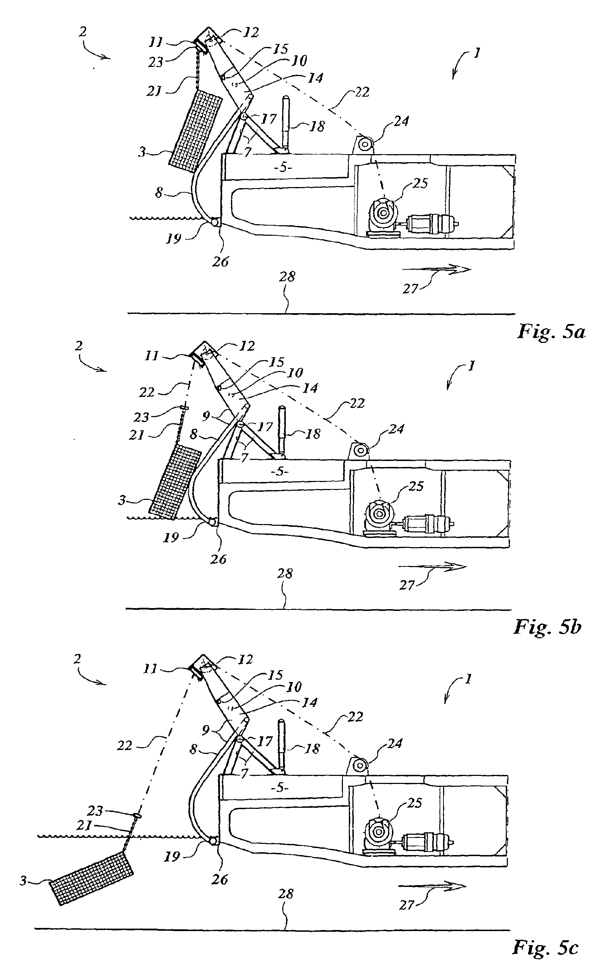

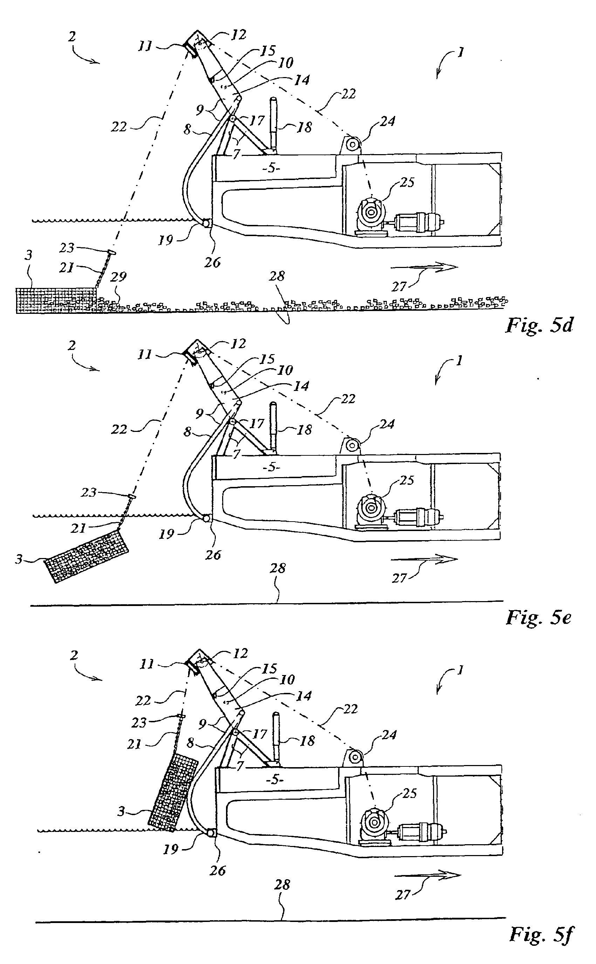

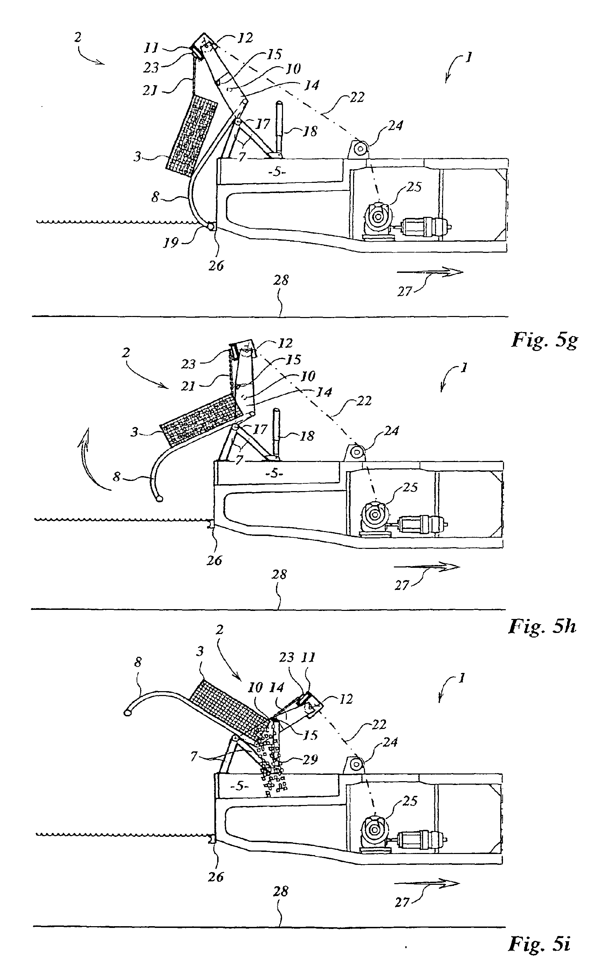

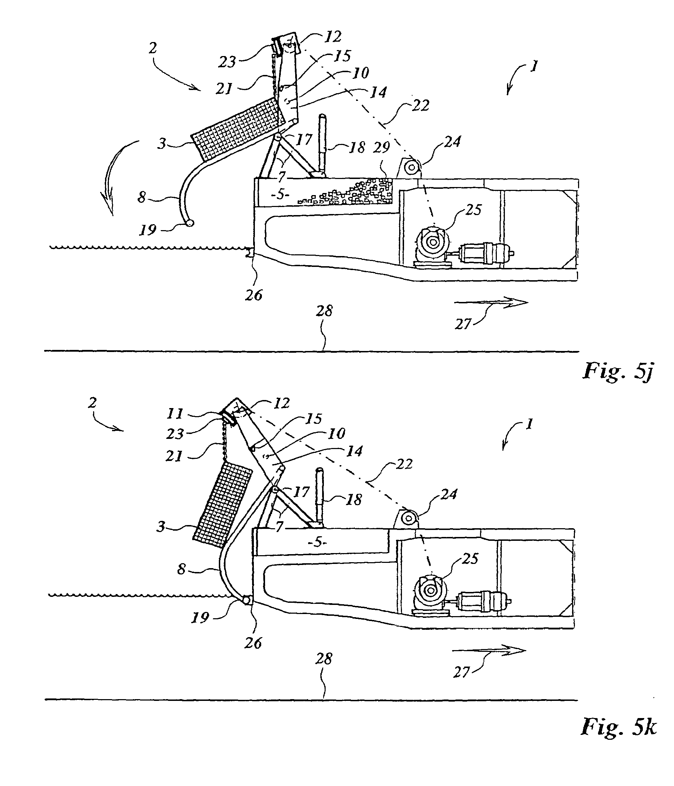

At the top of the top support 14, a disc 13 which can rotate about a shaft 12 is arranged, the shaft 12 running parallel to the rotation shaft 17. On the side of the disc 13 which is facing the guiding tubes 8, guide rollers 11 are arranged for guiding a winch cable 22 running over the disc 13 (see Fig. 5).

Two supporting legs 18 are arranged next to the supporting frame 7, which interact with supports 15 attached to the top support 14. When the tilting frame 9 with a trawl-net 3 lying thereon rotates about the rotation shaft 17, the rotation of the tilting frame 9 is limited by the fact that the support 15 rests on the supporting leg 18. As this rotation can take place at considerable speed due to the force of gravity, the supporting leg is provided with a flexible shock absorber in order to prevent damage.

Fig. 5 shows the action of the emptying device 2. The supporting frame 7 is positioned on the stern of the vessel 1, above the transom. The trawl-net 3 is provided with a chain 21 at the front, near the opening, to which the winch cable 22 is attached. The winch cable 22 runs between the guide rollers 11 via the disc 13 to a cable guide 24 placed on the afterdeck and from there to a winch 25. The cable guide 24 is placed in such a manner with respect to the rotation shaft 17 and the shaft 12 that by the effect of the tension in the winch cable 22 and with a trawl-net 3 suspended from the winch cable, the force on the disc 13 is directed such that the tilting frame 9 with the top support 14 and the guiding tubes 8 is pushed backwards in such a manner that the end tube 19 rests against a stop rubber 26 on the transom. In an alternative embodiment, the winch 25 is positioned at the location of the cable guide 24.

Fig. 5a shows the situation where the trawl-net 3 is suspended from the winch cable 22 and partly rests on the guiding tubes 8. The vessel 1 sails in a sailing direction 27. Fig. 5b shows the trawl-net 3 at the point in time where it is lowered into the water by easing the winch cable 22 using the winch 25 and Fig. 5c shows how the trawl-net 3 sinks to a bottom 28, and also shows that the trawl-net 3 drags behind the vessel 1 as a result of the speed of the vessel 1.

Fig. 5d shows the trawl-net 3 while it drags over the bottom 28 and mussels 29 collect in the trawl-net 3. Once the trawl-net 3 is sufficiently full, the trawl-net 3 is raised from the water by means of the winch 25, as is shown in Figs. 5e and 5f. The disc 13 is preferably positioned such that it is situated behind the end tube 19 during hoisting, so that the underside of the trawl-net 3 is guided upwards along the guiding tubes 8.

Figs. 5g, 5h and 5i show how the trawl-net 3 is emptied into the rinsing basin 5. The trawl-net 3 is hoisted up along the guiding tubes 8 until a clamping lug 23, which is clamped around the winch cable 22, knocks against the guide rollers 11. As the winch 25 will wind up the winch cable 22 further, the tilting frame 9 will start to tilt about the rotation shaft 17 by the effect of the force exerted by the clamping lug 23 on the tilting frame. When the guiding tubes 8 on which the trawl-net 3 rests are more or less horizontal, the trawl-net 3 will slide forwards over the guiding tubes 8 until it contacts the limiting tube 10. When the winch cable 22 is wound up further, the tilting frame 9 will tilt further until the supports 15 rest on the supporting leg 18. A switch is fitted in one supporting leg 18 which terminates the winding operation by the winch 25 when the tilting frame 9 rests on the supporting leg 18. In this position, the trawl-net 3 has tilted so far forward, that the mussels 29 from the trawl-net 3 fall into the rinsing basin 5.

In the event that the trawl-net 3 is fitted with a net which is located behind a tube frame, there will be facilities to ensure that the tube frame can slide along the guiding tubes. Moreover, a guide for the net will be arranged between the guiding tubes 8 and means will be provided in order to keep the net open when the trawl-net is tilted in order to be emptied.

Figs. 5j and 5k show how the trawl-net 3 is lowered into the water, after it has been emptied, by easing the winch cable 22 in order to catch the next load of shellfish 29.

In addition to the embodiment shown here, other embodiments of the unloading device are possible. Thus, it is possible, for example, to fixedly attach a number of the guiding tubes 8 against the transom, the tilting frame 9 having short tubes which support the trawl-net 3 during tilting. With other embodiments, the winch 25 is placed on the tilting frame 9 and there are separate drive means for tilting the tilting frame 9.

## Claims

1. Device suitable for catching shellfish (29) on the sea bottom (28), comprising a vessel (1) having a transom at the rear, a trawl-net (3) suitable for collecting shellfish, which trawl-net comprises a metal frame with a rigid flat underside, on the vessel a winch device (25) with a winch cable (22), a tilting frame (9) placed above the transom with first guide means (13, 24) along which the winch cable is guided in such a manner that the winch cable can pull the trawl-net into the tilting frame and drive means for tilting the tilting frame about a horizontal shaft (17), **characterized in that** the winch cable (22) is the only cable coupled to the trawl-ner and that guiding tubes (8) are present along the transom for guiding the underside of the trawl-net (3) along the transom during hoisting and lowering whereby the guiding tubes run to below the waterline and preferably to the underside of the vessel (1).

2. Device according to claim 1 whereby some or all of the guiding tubes (8) can rotate around the horizontal shaft (17) and form part of the tilting frame (9).

3. Device according to claim 2 whereby the guiding tubes (8) can support and tilt the trawl-net (3).

4. Device according to claim 3 whereby the guiding tubes (8) are designed such that the trawl-net (3) can slide forward along the guiding tubes preferably against a limiting tube (10) after the trawl-net is tilted to or past a horizontal position.

5. Device according to one of the previous claims whereby the winch device (25) and the winch cable (22) form the drive means of the tilting frame (9) and whereby a switch is provided for stopping the winding of the winch cable (22) when the tilting frame rests on a supporting leg (18).

6. Device according to one of the previous claims whereby the first guide means (13, 24) and the horizontal shaft (17) are designed such that the winch cable (22) pulls the tilting frame (9) backwards when the trawl-net (3) is suspended from the winch cable.

## Patentansprüche

1. Vorrichtung, geeignet zum Fangen von Schalentieren (29) auf dem Meeresgrund (28), aufweisend ein Fahrzeug (1), das am Heck einen Heckbalken hat, ein Schleppnetz (3), geeignet für Auffangen von Schalentieren, wobei das Schleppnetz einen Metallrahmen mit einer steifen ebenen Unterseite aufweist, am Fahrzeug eine Windenvorrichtung (25) mit einem Windenseil (22), einem Kipprahmen (9), der oberhalb des Heckspiegels mit ersten Führungseinrichtungen (13, 24) angeordnet ist, entlang denen das Windenseil auf solche Weise geführt wird, dass das Windenseil das Schleppnetz in den Kipprahmen ziehen kann, und Antriebsmittel für Kippen des Kipprahmens um eine waagrechte Achse (17), **dadurch gekennzeichnet, dass** das Windenseil (22) das einzige am Schleppnetz angeschlossene Seil ist und dass Führungsrohre (8) entlang dem Heckspiegel für ein Führen der Unterseite des Schleppnetzes (3) entlang des Heckspiegels während Anheben und Absenken vorhanden sind, wobei die Führungsrohre sich bis unterhalb der Wasserlinie und vorzugsweise bis zur Unterseite des Fahrzeugs (1) erstrecken.

2. Vorrichtung nach Anspruch 1, wobei einige oder alle Führungsrohre (8) um die waagrechte Achse (17) schwenkbar sind und einen Teil des Kipprahmens (9) darstellen.

3. Vorrichtung nach Anspruch 2, wobei die Führungsrohre (8) das Schleppnetz (3) tragen und kippen können.

4. Vorrichtung nach Anspruch 3, wobei die Führungsrohre (8) auf solche Weise konstruiert sind, dass das Schleppnetz (3) entlang den Führungsrohren vorzugsweise bis gegen ein Begrenzungsrohr (10) gleiten kann, nachdem das Schleppnetz bis in eine waagrechte Position oder an dieser vorbei gekippt worden ist.

5. Vorrichtung nach einem der vorhergehenden Ansprüche, wobei die Windenvorrichtung (25) und das Windenseil (22) das Antriebsmittel des Kipprahmens (9) darstellen, und wobei ein Schalter zum Abschalten des Windevorgangs des Windenseils (22) bereitgestellt ist, wenn der Kipprahmen auf einem Stützbein (18) ruht.

6. Vorrichtung nach einem der vorhergehenden Ansprüche, wobei die erste Führungseinrichtung (13, 24) und die waagrechte Achse (17) auf solche Weise konstruiert sind, dass das Windenseil (22) den Kipprahmen (9) nach hinten zieht, wenn das Schleppnetz (3) am Windenseil aufgehängt ist.

## Revendications

1. Dispositif prévu pour la pêche aux crustacés (29) sur les fonds marins (28), comprenant un navire (1) comportant un tableau à l'arrière, un chalut (3) pour recueillir les crustacés, lequel chalut comprend un cadre métallique avec un fond plat rigide ; sur le navire un dispositif de treuil (25) avec un câble de treuil (22), un cadre basculant (9) disposé au-dessus du tableau avec des premiers moyens de guidage (13,24) le long desquels le câble de treuil est guidé de manière que le câble de treuil puisse hisser le chalut dans le cadre basculant et des moyens de commande pour faire basculer le cadre basculant autour d'un arbre horizontal (17),
**caractérisé en ce que**
le câble de treuil (22) est le seul câble couplé au chalut et **en ce que** des tubes de guidage (8) sont présents le long du tableau pour guider le fond du chalut (3) le long du tableau pendant un hissage et une descente, tandis que les tubes de guidage descendent jusqu'à la ligne de flottaison et de préférence au-dessous du navire (1)

2. Dispositif selon la revendication 1, par lequel tout ou partie des tubes de guidage (8) peut tourner autour de l'arbre horizontal (17) et faire partie du cadre basculant (9).

3. Dispositif selon la revendication 2, par lequel les tubes de guidage (8) peuvent supporter et faire basculer le chalut (3).

4. Dispositif selon la revendication 3, par lequel les tubes de guidage (8) sont conçus de telle sorte que le chalut (3) peut coulisser vers l'avant le long des tubes de guidage de préférence contre un tube limiteur (10) après basculement du chalut vers ou au-delà d'une position horizontale.

5. Dispositif selon l'une des revendications précédentes, dans lequel le dispositif de treuil (25) et le câble de treuil (22) forment les moyens d'entraînement du cadre basculant (9) et par lequel il est prévu un commutateur pour immobiliser l'enroulement du câble de treuil (22) lorsque le cadre basculant repose sur une jambe d'appui (18).

6. Dispositif selon l'une des revendications précédentes, par lequel les premiers moyens de guidage (13,24) et l'arbre horizontal (17) sont conçus de telle sorte que le câble de treuil (22) tire le cadre basculant (9) vers l'arrière lorsque le chalut (3) est accroché au câble de treuil.
